# EUROPEAN PATENT SPECIFICATION

(11) **EP 0 944 793 B1**
(45) Date of publication and mention of the grant of the patent: **11.09.2002**
(21) Application number: 97945891.6
(22) Date of filing: 27.11.1997
(51) Int. Cl.: F16L 5/00, F24F 13/02

(54) **FIXING FRAME**
FIXIERRAHMEN
MONTURE

(30) Priority: 23.12.1996 FI 965189
(43) Date of publication of application: 29.09.1999
(73) Proprietor: ABB FLÄKT OY, 37801 Toijala (FI)
(72) Inventor: HÄNNINEN, Heikki, FIN-37830 Viiala (FI); LEHTO, Jouni, FIN-21270 Nousiainen (FI); LEINO, Jarkko, Kurt, FIN-21380 Aura (FI)
(74) Representative: Heinänen, Pekka Antero
(86) International application number: FI9700732
(87) International publication number: WO98028564

(56) References cited:
- WO-A-92/18798
- GB-A- 1 039 073
- SE-B- 391 384
- SE-C- 125 502
- SE-C- 153 807
- US-A- 3 726 545

## Description

The present invention relates to a fixing frame for mounting ventilation air inlet or outlet dampers to a planar structure such as a ceiling or wall panel, said fixing frame having a body of essentially cylindrical shape and being equipped at its front rim with a collar flange aligned essentially orthogonal to the center axis of the cylindrical body part, whereby said panel is machined to have a hole with a diameter and shape essentially equal to that of said fixing frame body part, into which hole the fixing frame is inserted so that its collar flange remains flush with the front surface of said panel, and said fixing frame has a threaded portion projecting radially inward from its inner surface so as to permit a damper with a compatible outer threaded portion to be mounted into said fixing frame.

In this context, the term fixing frame refers to a component which is first fixed on a wall or ceiling and into which is further mounted, generally in a detachable fashion, a ventilation air inlet or outlet damper. In the art are known a plurality of different damper designs with varying methods of mounting into a fixing frame. For instance, in Sweden is in general use a damper type equipped with two essentially semicircularly coiled wire spring clips. For accommodating such a damper, the fixing frame must have compatible grooves at which the outermost tips of the clips are aligned first. When the damper is subsequently pushed strongly into the fixing frame, the clips yield permitting the damper to snap in place. The detachment of the damper takes place in a reverse order by pulling the damper strongly, whereby the clips yield again.

Another damper type in general use is mounted in the fixing frame by rotation, whereby the fixing frame must have a threaded portion compatible with that of the damper. Typically, the threaded portion of the fixing frame must have an extremely coarse pitch and the threads are formed by two or more ridges radially separated from each other on the perimeter of the frame. Then, the damper can be detached from the fixing frame by rotating the damper body in a direction opposite to the direction of rotation required for mounting the damper.

A drawback of conventional fixing frames is that they are generally compatible with a given type of damper only; and if the damper is to be replaced by another type of damper designed for a different mounting method, also the fixing frame must be replaced.

It is an object of the present invention to provide a fixing frame capable of accommodating in a detachable manner at least such ventilation air inlet or outlet damper types that are designed for the above-described conventional mounting methods. The fixing frame according to the invention is characterized in that the cylindrical internal surface of the fixing frame has at least two essentially oppositely located grooved sites formed by the threaded portion for alternative mounting of a wire-clip-type damper body into the fixing frame, and that the threaded portion of the frame has an at least two-start thread, advantageously a four-start thread, whereby said grooved sites are formed between said threads.

A preferred embodiment of the fixing frame according to the invention is characterized in that the length of each thread is greater than half a pitch.

Another preferred embodiment of the fixing frame according to the invention is characterized in that each thread starts essentially close to the front rim of the fixing frame and then pitches gradually toward the rear rim of the cylindrical part of the frame.

The most significant benefit of the invention is that the same type of fixing frame can accommodate at least the two above-described common damper types using their different mounting methods.

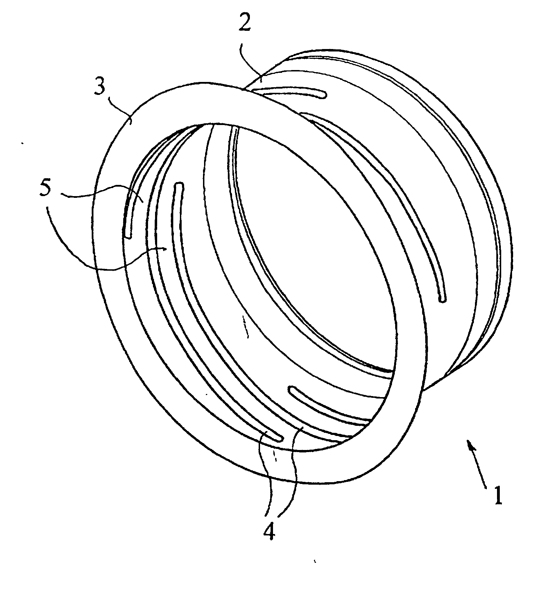

In the following, the invention will be examined in greater detail by making reference to the appended drawing in which is shown in a three-dimensional front view a fixing frame 1 according to the invention.

The wall or ceiling, in which a hole is made to accommodate the fixing frame according to the invention, is omitted from the drawing. Obviously, this kind of mounting method is known to those versed in the art. The hole to be made in the wall or ceiling must have a diameter essentially equal or slightly greater than the outer diameter of the cylindrical part 2 of the fixing frame. As mentioned, the fixing frame 1 is pushed home into the hole of the wall or ceiling so deep that the collar flange 3 of the fixing frame is flush with the surface of the wall or ceiling. Subsequently, the fixing frame 1 can be secured in place by means of nails or screws driven through the flange into the wall or ceiling. An alternative securing method is described in FI Pat. No. 96,719. However, the securing method of the fixing frame is not essential to the function of the invention.

The cylindrical part of the fixing frame 1 is provided with threads 4 made to project from the inner surface of the cylindrical part 2 so as to form grooves 5 between the thread crests. The number of thread starts is advantageously made four, each of which preferably extending more than half a pitch. This kind of design assures that on any point along the entire inner perimeter of the cylindrical part 2 can be found a grooved point suited to accept the above-described wire-clip-type damper in any precisely set position irrespective of the angular alignment of the fixing frame. The pitch of the threads 4 is made relatively fine in order to respectively achieve a fine pitch of the grooves 5 remaining thereinbetween. This property is essential for secure mounting of the wire-clip-type damper. Further, the distance between two adjacent thread crests 4 in the longitudinal direction of the cylindrical part must be dimensioned so that the width of the groove 5 remaining thereinbetween can securely lock the wire spring clips of the above-described damper type in place. As is evident from the drawing, each thread 4 starts from the front rim of the cylindrical part 2 of the fixing frame 1, or essentially close thereto, and then pitches relatively gradually toward the rear end of the cylindrical part. Besides forming said grooves 5 thereinbetween, the purpose of said threads 4 is to make the fixing frame 1 capable of accommodating dampers designed for threaded mounting, too.

To those versed in the art, it is obvious that the invention is not limited by the exemplifying embodiment described above, but rather can be varied within the scope of the appended claims.

The grooved points would not need necessarily be formed by the threads, but rather, the thread crests and the grooved sites could be formed separately from each other. However, in a practicable design this alternative results in a structure not capable of permitting the mounting of a wire-clip-type damper in any freely selectable angular position. While the drawing omits the details of dampers of the wire-clip type and the threaded type, respectively, such structures are well known to a person versed in the art.

## Claims

1. A fixing frame (1) for mounting ventilation air inlet or outlet dampers to a planar structure such as a ceiling or wall panel, said fixing frame having a body of essentially cylindrical shape and being equipped at its front rim with a collar flange (3) aligned essentially orthogonal to the center axis of the cylindrical body part (2), whereby said panel is machined to have a hole with a diameter and shape essentially equal to that of said fixing frame body part, into which hole the fixing frame is inserted so that its collar flange (3) remains flush with the front surface of said panel, and said fixing frame has a threaded portion (4) projecting radially inward from the inner surface of its cylindrical body part (2) so as to permit a damper with a compatible outer threaded portion to be mounted into said fixing frame, **characterized in that** the cylindrical internal surface of the fixing frame (1) has at least two essentially oppositely located grooved sites (5) formed by the threaded portion (4) for alternative mounting of a wire-clip-type damper body into the fixing frame (1), and that the threaded portion is provided with an at least two-start thread, advantageously a four-start thread, whereby said grooved sites (5) are formed between said threads.

2. A fixing frame as defined in claim 1, **characterized in that** the length of each thread (4) is greater than half a pitch.

3. A fixing frame as defined in claim 2, **characterized in that** each thread (4) starts from the front rim of the fixing frame (1), essentially close thereto, and then pitches gradually toward the rear end of the cylindrical part (2).

## Patentansprüche

1. Fixierrahmen (1) zur Befestigung eines Ventilationslufteinlaß- oder Ventilationsluftauslaßdämpfers auf einer planaren Anordnung wie einem Decken- oder Wandpanel, wobei der Fixierrahmen einen Körper von im wesentlichen zylindrischer Form aufweist und an seinem Vorderrand mit einem Ringflansch (3) versehen ist, der im wesentlichen rechtwinklig zur Mittelachse des zylindrischen Körperteils (2) angeordnet ist, wobei das Panel bearbeitet Ist, um ein Loch mit einem Durchmesser und einer Form im wesentlichen gleich zu der des Fixierrahmenkörperteils aufzuweisen, in das der Fixierrahmen so eingesetzt ist, daß sein Ringflansch (3) mit der Frontoberfläche des Panels fluchtet, und wobei der Fixierrahmen einen Gewindeabschnitt (4) aufweist, der sich von der inneren Oberfläche des zylindrischen Körperteils (2) radial nach innen erhebt, um zu ermöglichen, einen Dämpfer mit einem kompatiblen äußeren Gewindeabschnitt In den Fixierrahmen zu befestigen,
**dadurch gekennzeichnet,**
**daß** die zylindrische innere Oberfläche des Fixierrahmens zumindest zwei im wesentlichen gegenüberliegend angeordnete Rinnenabschnitte (5) aufweist, die durch den Gewindeabschnitt (4) ausgeformt werden, der als alternative Befestigung eines Dämpferkörpers des Drahtklipptyps im Fixierrahmen (1) dient, und daß der Gewindeabschnitt mit zumindest einem zweigängigen Gewinde, vorzugsweise einem viergängigen Gewinde, versehen ist, wobei die Rinnenabschnitte (5) zwischen den Gewinden ausgeformt sind.

2. Fixierrahmen nach Anspruch 1, **dadurch gekennzeichnet, daß** die Länge jedes Gewindes (4) größer als eine halbe Ganghöhe ist.

3. Fixierrahmen gemäß Anspruch 2, **dadurch gekennzeichnet, daß** jedes Gewinde (4) am, im wesentlichen nahe beim, vorderen Rand des Fixierrahmens beginnt und sich dann graduierllch dem hinteren Ende des zylindrischen Teils (2) nähert.

## Revendications

1. Une monture de fixation (1) pour le montage de modérateur d'entrée ou de sortie d'air de ventilation sur une structure plane tel que plafond ou panneau de mur, ladite monture de fixation ayant un corps de forme essentiellement cylindrique et étant équipée à son bord frontal d'une bride de collet (3) alignée essentiellement orthogonalement à l'axe central de la partie de corps cylindrique (2), ledit panneau étant usiné pour avoir un trou avec un diamètre et une forme essentiellement égaux à ceux de ladite partie de corps de la monture de fixation, trou dans lequel la monture de fixation est insérée de sorte que sa bride de collet (3) reste au ras de la surface frontale dudit panneau et ladite monture de fixation ayant une portion filetée (4) se projetant radialement vers l'intérieur depuis la surface intérieure de sa partie de corps cylindrique (2) de manière à permettre à un modérateur, avec une portion filetée extérieure compatible, d'être monté dans ladite monture de fixation,
**caractérisée en ce que** la surface intérieure cylindrique de la monture de fixation (1) a au moins deux emplacements (5) rainurés situés essentiellement en opposition formés par la portion filetée (4) pour un montage alternatif d'un corps de modérateur du type à attache en fil dans la monture de fixation (1), et **en ce que** la portion filetée est pourvue d'un filetage à au moins deux départs, avantageusement un filetage à quatre départs, lesdits emplacements rainurés (5) étant formés entre lesdits filetages.

2. Une monture de fixation telle que définie dans la revendication 1,
**caractérisée en ce que** la longueur de chaque filetage (4) est plus grande que la moitié d'un pas.

3. Une monture de fixation telle que définie dans la revendication 2,
**caractérisée en ce que** chaque filetage (4) part du bord avant de la monture de fixation (1), essentiellement près de lui et ensuite progresse graduellement vers l'extrémité arrière de la partie cylindrique (2).
